# EUROPEAN PATENT APPLICATION

(11) **EP 2 230 001 A1**
(43) Date of publication of application: **22.09.2010**
(21) Application number: 09155547.4
(22) Date of filing: 18.03.2009
(51) Int. Cl.: B01D 53/94, F01N 3/023, F01N 3/035, F01N 3/20

(54) **Exhaust gas treatment**

(71) Applicant: Nederlandse Organisatie voor Toegepast -Natuurwetenschappelijk Onderzoek TNO, 2628 VK Delft (NL)
(72) Inventor: The designation of the inventor has not yet been filed
(74) Representative: Hatzmann, Martin

(57) **Abstract**

The invention is directed to an exhaust gas treatment in lean burn engines. In a first aspect, the invention provides a method for treating exhaust gas comprising NOₓ from a lean burn engine, comprising the steps of:
- a first reduction step, wherein at least part of the NOₓ from said exhaust gas is reduced in the presence of a first reductant at a temperature of 300 °C or higher using a first close-coupled selective catalytic reduction (SCR) catalyst; and
- a second reduction step, wherein at least part of the NOₓ from the in the first reduction step treated exhaust gas is reduced in the presence of a second reductant at a temperature of between 200 - 600 °C using a second SCR catalyst, downstream of said first catalyst.

## Description

The invention is directed to an exhaust gas treatment in lean burn engines.

Lean burn exhaust gas typically contains nitrogen oxides, sulfur oxides, carbon monoxide and particulate matter, which consists of unburned carbon compounds.

To meet the various emission regulations on lean burn engines, it has become necessary to treat the exhaust gas of a lean burn engine in various ways. A technique called exhaust gas recirculation (EGR) is typically used to reduce the emission of mono-nitrogen oxides (NOₓ) from lean burn engines by taking part of the exhaust gas and recirculate it into the engine. A disadvantage of using EGR is that the combustion efficiency of the lean burn engine typically deteriorates, which may lead to increased fuel consumption and increased CO₂ emission. Furthermore, the use of EGR increases the emission of particulate matter, which leads to increased requirements to the particulate filter and the need to regenerate the particulate filter more often. Furthermore, the extra heat generated using EGR is diverted back to the engine, which may lead to cooling problems.

Furthermore, NOₓ emission can be reduced by making use of selective catalytic reduction (SCR). In SCR, NOₓ is reduced in the presence of a reductant using an SCR catalyst. Ammonia-SCR makes use of ammonia (NH₃) as a reductant. The reductant can reduce NOₓ with the aid of a catalyst into nitrogen (N₂) and water.

One of the problems encountered in SCR is that when working at light capacity or when starting up a cold engine, the exhaust gas has a low temperature, which results in the SCR catalyst working outside its optimal range.

In order to meet future emission regulations, there is currently a need for engines that have a very low NOₓ emission, e.g. a NOₓ emission lower than 0.5 g/kWh. Recently developed diesel engines with such low NOₓ emission typically all comprise a combination of EGR and SCR.

WO-A-00/29728 describes a system for reducing NOₓ emission, which uses multiple SCR catalysts effective at different operating temperature ranges. In one specific feature of this application, a first SCR catalyst closest to the engine is a close-coupled SCR catalyst that is catalytically active at a low temperature range, *viz*. 100-300 °C, consistent with initial start-up and typical urban driving conditions, while a second SCR catalyst is catalytically active at higher temperature ranges consistent with higher operating temperatures in highway or high load operation. Furthermore, an ammonia oxidizing catalyst (AMOX) may be provided downstream of the two SCR catalysts to oxidize NH₃ into N₂ and possibly NOₓ or N₂O.

Object of the present invention is to provide an improved method for treating exhaust gas from a lean burn engine using SCR that solves at least in part the problems encountered in the prior art, which method has a high NOₓ conversion rate, low NOₓ emission, low fuel costs and low emission of CO₂ and particulate matter.

In a first aspect, this object is met by providing a method for treating exhaust gas comprising NOₓ from a lean burn engine, comprising the steps of:
- a first reduction step, wherein at least part of the NOₓ from said exhaust gas is reduced in the presence of a first reductant at a temperature of 300 °C or higher using a close-coupled selective catalytic reduction (SCR) catalyst; and
- a second reduction step, wherein at least part of the NOₓ from the in the first reduction step treated exhaust gas is reduced in the presence of a second reductant at a temperature of between 200-600 °C using a second SCR catalyst, downstream of said close-coupled catalyst.

The inventors surprisingly found that by placing a first SCR catalyst close-coupled, NOₓ can be reduced at a temperature of 300 °C or higher, even under cold-start conditions of the lean-burn engine. By using such a close-coupled SCR catalyst in combination with a second SCR catalyst, NOₓ conversion is increased, in particular under cold-start conditions.

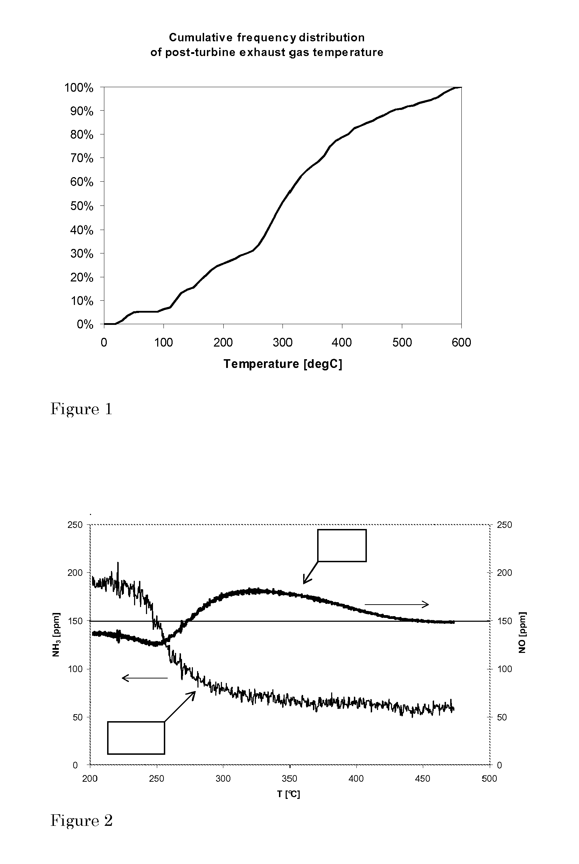

It was found that when an SCR catalyst is placed in a close-coupled position, it experiences temperatures close to the exhaust gas temperatures at the turbine outlet, which temperatures typically exceed 300 °C. Even under cold-start conditions, a close-coupled SCR catalyst will be exposed to temperatures that exceed 300 °C at least part of the time, e.g. about 40% of the time. This effect is also demonstrated in figure 1. Cold-start conditions as used herein are engine conditions used in cold-start tests as applied in the standardized European and US test cycles for engine or vehicle type approval. Furthermore, it should be noted that several reactions may take place in the first reduction step. The first group of reactions catalytically reduces NOₓ using NH₃ as a reductant according to one of the following reactions:

4 NH₃ + 4 NO + O₂ → 4 N₂ + 6 H₂O (1)

4 NH₃ + 2 NO + 2NO₂ → 4N₂ + 6H₂O (2)

8 NH₃ + 6 NO₂→ 7 N₂ + 12 H₂O (3)

Second, NH₃ may be oxidized under influence of the SCR catalyst into N₂ and NO according to the following reactions:

4NH₃ + 3 O₂ → 2 N₂ + 6 H₂O (4)

4 NH₃ + 5 O₂ → 4 NO + 6 H₂O (5)

The occurrence of reactions (4) and (5) has two unwanted results. First, the oxidation of NH₃ according to reaction (5) will produce NO and will thus lead to an increase in NOₓ. Second, part of the reductant is consumed in reactions (4) and (5) without contributing to NOₓ reduction.

It was found that when using close-coupled SCR catalysts that are not catalytically active at sufficiently high temperatures , e.g. temperatures of 300 °C and higher, reactions (4) and (5) become dominant over reactions (1) to (3) at temperatures exceeding 270 °C. As a result, net NOₓ production may occur. This effect is also demonstrated in figure 2.

The occurrence of reaction (4) and (5) may be at least in part avoided by choosing a close-coupled SCR catalyst that is catalytically active at temperatures above 225 °C, preferably above 270 °C, more preferably above 300 °C. Consequently, reactions (1) to (3) are the dominant reactions and net NOₓ reduction is achieved.

Close-coupled as used herein is defined as being sufficiently close to the lean burn engine that rapid heat-up through heat-exchange occurs. Whether an SCR catalyst is close-coupled depends both on its distance to the engine and to the amount catalyst bulk material present in the first reduction step. When the distance between the SCR catalyst and the engine is small, heat loss will also be small and heat-exchange will therefore be more efficient. Typically, the SCR catalyst is close-coupled when located at a position within 100 cm of the engine. Furthermore, when the amount of catalyst bulk material present in the first reduction step is small, heat-up of the catalytic converter will be achieved faster than when the amount of catalyst bulk material present in the first reduction step is large.

Preferably, the distance between the SCR catalyst in the engine is as small as possible, so that heat loss during heat-exchange from the engine to the catalyst is kept as small as possible. Preferably, the SCR catalyst is located within 70 cm of the lean burn engine, more preferably within 50 cm of the lean burn engine.

Typically, the close-coupled SCR lies within 50 cm downstream from the exhaust manifold or turbo, if present, of the lean burn engine. By using a close-coupled first SCR catalyst, the catalyst will warm up quickly. This increases the efficiency of the catalyst, in particular under cold-start conditions of the engine.

It was further found that the time it takes for the SCR to warm up under cold-start conditions is very important for the efficiency of NOₓ conversion. It is therefore advantageous to use an SCR catalyst in close-coupled configuration, so that the engine provides the catalyst with heat. Because it is practically not possible to carry out the entire SCR in close-coupled configuration, the SCR is split up in two steps. In this way, a small amount of SCR catalyst, *viz*. the close-coupled SCR catalyst, can be active early under cold-start conditions. Consequently, the first reduction step only has a limited capacity and the second reduction step is needed to reduce at least part of the remaining NOₓ. Typically, the majority of NOₓ conversion occurs in the second reduction step due to the limited capacity of the first reduction step.

The compartment wherein the first reduction step is carried out is called the first SCR compartment. The compartment wherein the second reduction step is carried out is called the second SCR compartment. The total size of the two compartments wherein selective catalytic reduction occurs depends on the size of the lean burn engine. Large lean burn engines will typically produce higher exhaust gas flows leading to higher exhaust gas velocities and lower exhaust gas residence time in the SCR catalyst which ultimately causes less NOₓ conversion. Consequently, a large lean burn engine requires a larger total size of the first and second SCR compartment to maintain the same NOₓ conversion as a small lean burn engine.

The ratio between the volume of the first SCR compartment and the second SCR compartment is preferably the same regardless of engine size. Preferably, the volume of the first SCR compartment is 25-55% the size of the volume of the second SCR compartment, more preferably 35-45% or less. The advantage of using these ratios is that these ratios represent a near-optimal trade-off between the space typically available under the bonnet or overhead cabin and decent NOₓ conversion under cold-start conditions. On the one hand, the first SCR compartment should be as small as possible to stimulate the heat-up of the close-coupled SCR by the engine. However, the above-mentioned volume ratio restricts the SCR compartment not to be too small. In addition, the back pressure will be higher in large engines than in small engines, because of the higher exhaust gas flow. Maximum allowable back pressure poses limits on the minimal frontal open area of the catalytic converter. High back pressure further imposes more stringent requirements on the mechanical strength of the catalyst bulk material.

It is further advantageous to carry out SCR in two steps, because an exhaust gas sensor measuring NOₓ and/or reductant levels can be placed between the first and second reduction step. This information may then be used in the second reduction step, e.g. for adjusting reductant concentrations.

The first SCR catalyst may be chosen from the group consisting of vanadium catalysts and zeolites, for example V₂O₅/TiO₂ catalysts, V₂O₅/WO₃/TiO₂ catalysts, or Fe- or Cu-exchanged zeolites, supported on a ceramic or metallic substrate.

Preferably, vanadium catalysts are used as the close-coupled SCR catalyst. Such catalysts are generally cheap and do only need small amounts of NO₂ to be effective. Zeolites may also be used. However, zeolite catalysts need sufficient NO₂ to function adequately.

Typically, the second reduction step is carried out at a slightly lower temperature than the first reduction step, because of heat loss when the exhaust gas is transferred from the first to the second SCR catalyst. The temperature loss per meter exhaust pipe line is typically in the range of 25 to 50 °C.

The temperature of the second close-coupled SCR may often not be optimal, in particular under cold-start conditions. The second SCR catalyst is therefore preferably catalytically active within a temperature range as large as possible, e.g. a temperature range of 225-600 °C. The second SCR catalyst can for example be chosen from the group consisting of vanadium catalysts and zeolites. Examples of such catalysts are V₂O₅/TiO₂ and V₂O₅/WO₃/TiO₂ catalysts, or Fe- or Cu-exchanged zeolites. Catalysts used are preferably supported on a ceramic or metallic substrate.

It is important in the method of the present invention that both the first and second SCR catalyst are active at the same time to obtain an efficiency as high as possible. For this purpose, the first SCR catalyst and the second SCR catalyst may be chosen to be the same catalyst, for example vanadium and zeolite catalysts such as V₂O₅/TiO₂ and V₂O₅/WO₃/TiO₂ catalysts, or Fe- or Cu-exchanged zeolites. Catalysts used are preferably supported on a ceramic or metallic substrate.

The reductant can be added by means of an injection mixture, which mixture is injected into the exhaust line prior to the first reduction step. The injection mixture comprises at least the reductant or a precursor thereof. A reductant precursor is a compound that is converted into NH₃ after injection, either upstream of or in the reduction step.

The first reductant present in the first reduction step may be added by means of a first injection mixture that is injected into the exhaust gas coming from the lean burn engine, preferably prior to the first reduction step. The first reductant may also be injected directly into the compartment where the first reduction step takes place. The second reductant may be added by means of a second injection mixture that is injected into the exhaust gas prior to the second reduction step, but after the first reduction step.

Furthermore, a means for determining the NOₓ concentration, the reductant concentration or both is provided between the first and second reduction step. Thus, the reduction reactions in the first and second reduction steps can be controlled by adjusting the injection of the first or second reductant.

Preferably, the first and second reductant are the same compound. In this case, an excess of reductant may be added in the first reduction stage. Any remaining first reductant may then be used as the second reductant in the second reduction stage. This is very desirable, because in this way no extra means are required for the introduction of the second reductant in the exhaust gas. When using an SCR catalyst in the first reduction step that is not catalytically active at temperatures of 300 °C or higher, this would not be possible, because the reductant would in that case be oxidized by the SCR catalyst as described hereinabove.

Ammonia may be used as a reductant in both SCR steps. Ammonia can be added by means of an injection mixture as described hereinabove, which mixture comprises at least ammonia or an ammonia precursor. For example, the injection mixture may be anhydrous ammonia, aqueous ammonia, urea or an aqueous urea solution. Preferably, an aqueous urea solution is used as the injection mixture. For example, a 32.5 wt.% solution of urea in demineralised water may be used as the injection mixture. Such a solution is available under the name AdBlue™.

Urea, as for example present in AdBlue™, is an example of an ammonia precursor. Urea may decompose into NH₃ and isocyanic acid (HNCO) when exposed to high temperatures in a thermolysis reaction. HNCO can subsequently be hydrolyzed in the presence of water into NH₃ and CO₂. When using an aqueous urea solution as injection mixture in the method of the invention, thermolysis of urea occurs in the exhaust line. Furthermore, hydrolysis may occur due to the water present in aqueous urea solution. Hydrolysis of HNCO is typically catalyzed in the NOₓ reduction steps. When aqueous urea solution is only injected once in the method of the invention, *viz.* prior to the first reduction step, substantially all urea, i.e. at least 99% of the urea, is converted into NH₃ and CO₂ before or during the first reduction step. The remaining NH₃ can then be used as a reductant in the second reduction step.

Preferably, a diesel engine is used as the lean burn engine according to the method of the invention.

The method of the present invention may further comprise an oxidation step, preferably downstream of said second reduction step. In this step, unburned fuel and hydrocarbons in the exhaust gas are oxidized, and particulate matter, hydrocarbon based soluble organic fraction (SOF) and carbon monoxide content in the exhaust gas are reduced.

The oxidation reactions in the oxidation step are preferably catalyzed by an oxidation catalyst, which is preferably a palladium or platinum catalyst. In case a diesel engine is used as the lean-burn engine, use is made of a diesel oxidation catalyst (DOC). Palladium and platinum catalysts may be used as a DOC in the oxidation step to oxidize unburned fuel and hydrocarbons, reduce the particulate matter (PM), hydrocarbon based soluble organic fraction (SOF), and carbon monoxide content of the exhaust gas. A DOC may further oxidize part of the NO emissions to NO₂, which may promote NOₓ conversion in an SCR step if such a step is placed downstream of the DOC, and passive soot oxidation with NO₂ in a DPF (diesel particulate filter, see below) step.

In prior art, the oxidation step is typically carried out directly prior to the SCR catalyst. SCR works optimally when the ratio NO:NO₂ is about 1. As this ratio in exhaust gas is typically much higher than 1, it is desirable if part of the NO present in the exhaust gas is oxidized to NO₂. This can be achieved by placing a DOC directly upstream from the SCR.

However, it was found that placing the DOC downstream of the SCR also has important advantages. The SCR may for example warm up faster when a DOC is placed downstream of the SCR. Thus, the efficiency of the NOₓ conversion is improved. Preferably, the diesel oxidation catalyst is chosen from the group consisting of platinum, palladium or rhodium. Preferably, these catalysts are supported on a ceramic or metallic substrate.

The method of the invention may further comprise a step wherein particulate matter is removed from the lean-burn exhaust gas using a particulate filter, which step preferably directly succeeds the oxidation step. The particulate filter traps the exhaust gas particulate matter. The accumulated particulate matter is oxidized using NO₂ or oxygen, producing less harmful components, *viz.* CO₂. Passive particulate matter oxidation involving NO₂ happens continuously at temperatures exceeding 275 °C. Active regeneration involving O₂ is triggered periodically and is much faster than passive regeneration, but requires exhaust gas temperatures exceeding 550 °C. In diesel engine applications, such a particulate filter is called a diesel particulate filter (DPF). A DPF is a device designed to remove diesel particulate matter from the exhaust gas of a diesel engine. The DPF can be of a wall flow type in which the total exhaust gas flow is forced through a porous wall. The DPF may also be of a partial flow filter type, in which part of the exhaust gas stream is deflected to the filter medium. The filter can be constructed from ceramic material or metal.

Preferably, a catalytic coating is added to the DPF to help burn off the accumulated particulate matter through promoting passive soot oxidation involving NO₂. A portion of the NO in the exhaust gas will be converted to NO₂ which is consumed by the soot burning inside the DPF at temperatures ranging from 275 °C to 500 °C. This coating typically contains platinum and/or palladium and also facilitates hydrocarbon oxidation in the DPF.

The DPF structure can also be coated with an SCR catalytic coating, to function as a third stage for NOₓ conversion, or to integrate the second NOₓ reduction stage and the particulate matter (PM) reduction stage. This SCR catalytic coating can be chosen from the group consisting of V₂O₅/TiO₂ catalysts, V₂O₅/WO₃/TiO₂ catalysts or Fe- or Cu-exchanged zeolites.

The DPF is preferably placed close to the DOC, more preferably directly after the DOC, so that heat obtained in the oxidation step is transferred to the DPF. This is desirable, because high temperatures are needed for active regeneration. Active regeneration, i.e. soot oxidation with O₂, is significant at temperatures above 550 °C.

The method of the present invention may comprise means to facilitate active regeneration of the DPF. It is for example desirable to introduce additional hydrocarbons into the exhaust gas, which hydrocarbons generate heat when oxidized. This can be achieved by injecting fuel into the exhaust gas.

Fuel may be injected in the exhaust line prior to the oxidation step, e.g. before the DOC and after the second reduction step. The hydrocarbons in the fuel may then be catalytically oxidized in the oxidation step by the DOC. This reaction is exothermic and causes the temperature of the exhaust gas to increase to about 550-650 °C. When the exhaust gas has such a high temperature, this may facilitate active soot regeneration in the DPF. In case the DPF comprises a catalytic coating suited for hydrocarbon oxidation, fuel may also be injected in the exhaust line after the oxidation step, but prior to the DPF. This is advantageous, because the heat required for active DPF regeneration is in such a case generated in the DPF itself through oxidation of the injected hydrocarbons.

Fuel may also be injected late in the work stroke or in the exhaust stroke of the engine. This fuel will introduce extra hydrocarbons in the exhaust gas, which may then be catalytically oxidized by the DOC as described hereinabove. An advantage of introducing the fuel in the engine is that no injection means are required in the exhaust line.

Furthermore, fuel may be burned prior to the step wherein particulate matter is removed. In this case, the fuel is not catalytically oxidized on an oxidation catalyst. A fuel burner vaporizes and ignites fuel injected the exhaust gas stream and does not require an oxidation step to accomplish temperatures in the range of 550-650 °C for active particulate matter oxidation.

The method of the invention may further comprise a step wherein unreacted ammonia from the second reduction step is at least in part oxidized using an Ammonia Oxidation Catalyst (AMOX). The AMOX may be placed downstream of the second reduction step and preferably upstream of the DOC.

After the second reduction step, unreacted reductant may still be present in the exhaust gas, in particular when using an excess amount of reductant in the second reduction step. The AMOX may oxidize excess NH₃. The NH₃ is preferably selectively oxidized to N₂. Undesired by-products such as NO and N₂O may be formed through non-selective oxidation of ammonia. Platinum, Palladium or Silver is typically used to catalyze the ammonia oxidation. Bi-functional ammonia oxidation catalysts contain an active component which improves the apparent selectivity by promoting NO reduction through a selective catalytic reduction step of NO with NH₃. Bi-functional ammonia oxidation catalysts typically contain copper- or iron-exchanged zeolite materials or V₂O₅ content. In absence of an AMOX, the unreacted reductant may be catalytically oxidized in the oxidation and/or particulate matter reduction step.

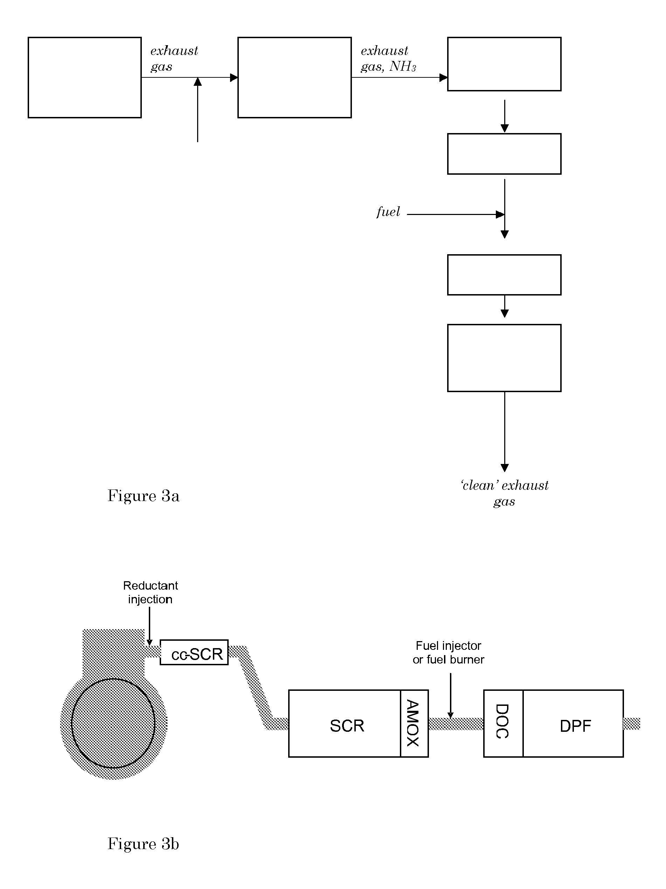

Figure 3a is a schematic representation of one embodiment according to the present invention. Lean burn engine (1) produces an exhaust gas, to which an aqueous urea solution is injected as the injection mixture. In the exhaust line and first reduction step, the urea will be converted into the reductant NH₃ and CO₂. The exhaust gas is then treated in a first SCR step (2). The treated exhaust gas coming out of the first SCR step comprises at least part of the reductant (NH₃) and is treated in a second SCR step (3). The treated exhaust gas obtained in this step is further treated in an ammonia oxidation step (4). Subsequently, fuel is introduced in the exhaust gas, which exhaust gas is then fed to an oxidation step using a diesel oxidation catalyst (5) and is subsequently led through a particulate filter (6).

Figure 3b schematically represents the same embodiment that shows the different components.

In a further aspect the invention is directed to an apparatus comprising a diesel engine and an exhaust line, which exhaust line comprises:
- a first compartment comprising an selective catalytic reduction (SCR) catalyst connected downstream to said diesel engine, which compartment is in close-coupled configuration with said diesel engine;
- a second compartment comprising an SCR catalyst, connected downstream to said first compartment;
- a third compartment comprising an ammonia oxidation catalyst (AMOX), connected downstream to said second compartment;
- a fourth compartment comprising a diesel oxidation catalyst, connected downstream to said third compartment;
- a diesel particulate filter connected downstream to said fourth compartment;
wherein the volume of said first compartment is 40% or less of the volume of the second compartment.

## Claims

1. A method for treating exhaust gas comprising NOₓ from a lean burn engine, comprising the steps of:
- a first reduction step, wherein at least part of the NOₓ from said exhaust gas is reduced in the presence of a first reductant at a temperature of 300 °C or higher using a first close-coupled selective catalytic reduction (SCR) catalyst; and
- a second reduction step, wherein at least part of the NOₓ from the in the first reduction step treated exhaust gas is reduced in the presence of a second reductant at a temperature of between 200 - 600 °C using a second SCR catalyst, downstream of said first catalyst.

2. Method according to claim 1, wherein said close-coupled SCR catalyst is located within a distance of 70 cm, preferably within a distance of 50 cm, of said lean burn engine.

3. Method according to any of the previous claims, wherein the volume of the compartment wherein the first reduction step is carried out is 25-55% of the volume of the compartment wherein the second reduction step is carried out or less, preferably 35-45% or less.

4. Method according to any of the previous claims, wherein said first and second SCR catalyst are chosen from the group consisting of vanadium catalysts and zeolites, and wherein preferably said second SCR catalyst is chosen from the group consisting of vanadium catalysts and zeolites.

5. Method according to any of the previous claims, wherein in said first reduction step NOₓ is reduced at a temperature below 600 °C.

6. Method according to any of the previous claims, wherein in said second reduction step NOₓ is reduced at a temperature of 225 - 450 °C.

7. Method according to any of the previous claims, wherein said reductant is added prior to the first reduction step by means of an injection mixture comprising ammonia or an ammonia precursor.

8. Method according to claim 7, wherein said ammonia precursor is urea.

9. Method according to claim 7 or 8, further comprising a step wherein unreacted ammonia from the second reduction step is at least in part oxidized using an Ammonia Oxidation Catalyst (AMOX).

10. Method according to any of the previous claims, further comprising an oxidation step using an oxidation catalyst, preferably downstream of said second reduction step.

11. Method according to claim 10, further comprising a step wherein particulate matter is removed from the exhaust gas using a particulate filter, downstream of said oxidation step.

12. Method according to claim 10, wherein said oxidation catalyst is a diesel oxidation catalyst, which catalyst is preferably chosen from the group consisting of palladium and platinum catalysts.

13. Method according to any of the previous claims, wherein said first SCR catalyst is catalytically active at temperatures between 225 °C and 450 °C, preferably at temperature between 300 °C and 450 °C.

14. Method according to any of the previous claims, wherein means is provided between the first and second reduction step for determining NOₓ and/or NH₃ concentrations and optionally adjusting the reactant concentration based on the information obtained from the determined concentrations.

15. Apparatus comprising a diesel engine and an exhaust line, which exhaust line comprises:
- a first compartment comprising a selective catalytic reduction (SCR) catalyst connected downstream to said diesel engine, which compartment is in close-coupled configuration with said diesel engine;
- a second compartment comprising an SCR catalyst, connected downstream to said first compartment;
- a third compartment comprising an ammonia oxidation catalyst (AMOX), connected downstream to said second compartment;
- a fourth compartment comprising a diesel oxidation catalyst, connected downstream to said third compartment;
- a diesel particulate filter connected downstream to said fourth compartment;
wherein the volume of said first compartment is 40% or less of the volume of the second compartment.
